(19) **Europäisches Patentamt / European Patent Office / Office européen des brevets**

(11) **EP 1 443 145 B1**

(12) **EUROPEAN PATENT SPECIFICATION**

(45) Date of publication and mention
of the grant of the patent:
**27.01.2010 Bulletin 2010/04**

(51) Int Cl.:
***D21F 3/02*** (2006.01)

(21) Application number: **04250474.6**

(22) Date of filing: **28.01.2004**

(54) **Wet paper web transfer belt**

Transferband für eine feuchte Papierbahn

Bande de transfert pour une bande de papier humide

(84) Designated Contracting States:
**AT BE BG CH CY CZ DE DK EE ES FI FR GB GR
HU IE IT LI LU MC NL PT RO SE SI SK TR**

(30) Priority: **29.01.2003 JP 2003020471**

(43) Date of publication of application:
**04.08.2004 Bulletin 2004/32**

(73) Proprietor: **ICHIKAWA CO.,LTD.
Tokyo (JP)**

(72) Inventor: **Inoue, Kenji,
c/o Ichikawa Co.,Ltd.
Tokyo (JP)**

(74) Representative: **Hoarton, Lloyd Douglas Charles
et al
Forrester & Boehmert
Pettenkoferstrasse 20-22
80336 Munich (DE)**

(56) References cited:
**EP-A- 0 576 115     EP-A- 1 069 235
EP-A- 1 096 066     WO-A-01/27387**

**Description**

FIELD OF THE INVENTION

This invention relates to wet paper web transfer belts, and particularly, to a belt for transferring a wet paper web at high speed.

BACKGROUND OF THE INVENTION

In recent years, the "closed draw" papermaking machine has been developed for achieving higher speed operation of a papermaking machine. In contrast with the conventional open draw machine, in which a wet paper web is transferred without being supported, in the closed draw machine, the wet paper web is supported throughout the papermaking process. The closed draw structure solves various problems encountered in the operation of the open draw machines, such as running out of paper. Thus, higher speed production can be achieved.

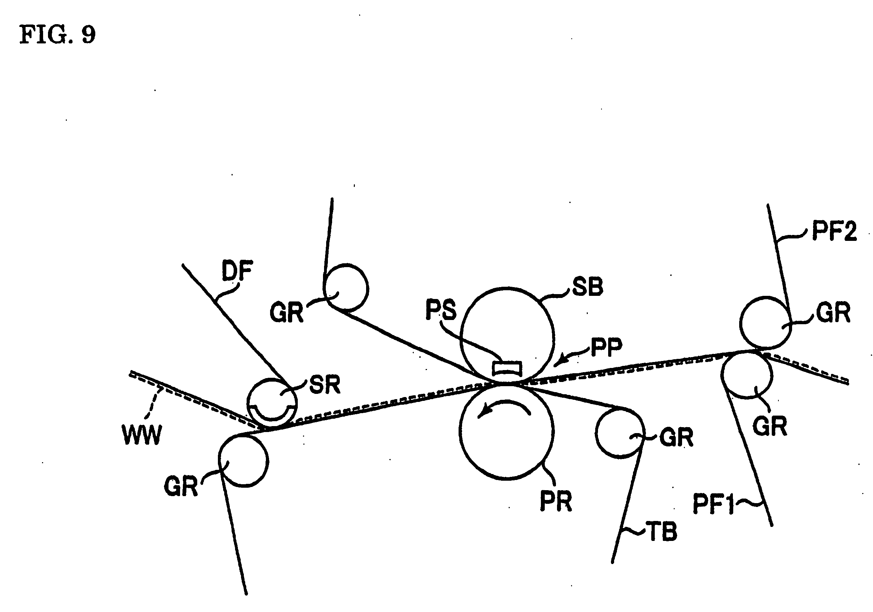

In a typical closed draw papermaking machine, as depicted schematically in FIG. 9, a wet paper web WW, shown by a broken line, which is transferred from right to left in the figure, is supported by press felts PF1 and PF2, a wet paper web transfer belt TB, and a dryer fabric DF. The press felts PF1 and PF2, the wet paper web transfer belt TB, and the dryer fabric DF, are endless belts supported by guide rollers GR.

The wet paper web WW passes through a press part comprising a press roll PR, a concave shoe PS, which conforms to the shape of the press roll, and a shoe press belt SB. The wet paper web then moves past a suction roll SR. The press part and the suction roll structures are generally known.

In the operation of the closed draw machine, a continuous wet paper web WW passes successively through a wire part and a first press part. (The wire part and the first press part are not illustrated.) The wet web is carried from the first press part on press felt PF1, and is then transferred to press felt PF2, as shown in FIG. 9. The press felt PF2 transfers the wet paper web to the press part PP. The wet paper web WW is pinched between by the press felt PF2 and the wet paper web transfer belt TB by the pressure applied by the press roll PR, and by the shoe PS through the shoe press belt SB.

The press felt PF2 has high water permeability and the wet paper web transfer belt TB has low water permeability. Consequently, water in the wet paper web WW moves to the press felt PF2 at the press part PP.

Immediately after the press felt PF2, the wet paper web WW, and the wet paper web transfer belt TB move out of the press part, the pressure on them is suddenly released, and they expand in volume. This expansion, together with the capillary action of the pulp fibers forming the wet paper web WW, causes a rewetting phenomenon wherein part of water in the press felt PF2 moves back into to the wet paper web WW. However, since the wet paper web transfer belt TB has very low permeability, it does not hold water. Therefore, rewetting from the wet paper web transfer belt TB does not occur, and the transfer belt TB contributes to improvement in the efficiency of water removal from the wet paper web.

After the wet paper web WW moves out of the press part PP, it is transferred by the transfer belt TB to the suction roll SR, where the wet paper web is transferred to dryer fabric DF which carries the web through a drying process.

There are several requirements for the proper operation of the wet paper web transfer belt TB. For transfer, the wet paper web WW must be attached to the transfer belt TB, during transport, after the belt moves out of the press part PP. However, the wet paper web WW must be removable from the transfer belt TB smoothly when the web is transferred to the next stage of the papermaking process.

Various transfer belt structures have been proposed for meeting these requirements. Among them, is belt structure of FIG. 10, which is described at pages 7 and 10-13, and shown in Figure 4, of Japanese Patent No. 3264461. In FIG. 10, the wet paper web transfer belt TB10 comprises a woven fabric 31, a high molecular weight elastic section 51 formed on one side of the woven fabric, and a batt layer 41 formed on the other side of the woven fabric. The wet paper web side layer TB11 of belt TB10 is formed by the high molecular weight elastic section 51 and the machine side layer TB12 is formed by the batt layer 41.

The exposed surface of the wet paper web side layer TB11 is roughened by grinding. The ten-point average surface roughness Rz (according to JIS-B0601) is in the range of 0 to 20 microns while the belt is in the press part, and in the range of 2 to 80 microns after the belt moves out of the press part.

The ten-point average roughness Rz, in the range of 0 to 20 microns in the press part is maintained for a short time after the belt moves out of the press part. In other words, the surface of the wet paper web side layer TB11 is smooth at this point. Therefore, a thin film of water may be formed between the wet paper web and the smooth surface of the wet paper web side layer TB11. The thin film of water causes the wet paper web to adhere to the surface of the wet paper web side layer TB11.

As the transfer belt TB10 travels away from the press part, the ten-point average surface roughness of its wet paper web side layer TB11, increases to a level within the range from 2 to 80 microns. The increase in the surface roughness of layer TB 11, breaks the thin water film, reducing the adhesion between the transfer belt and the wet paper web. Therefore, the wet paper web can be more easily transferred from the belt TB 10 to the next stage of the papermaking process.

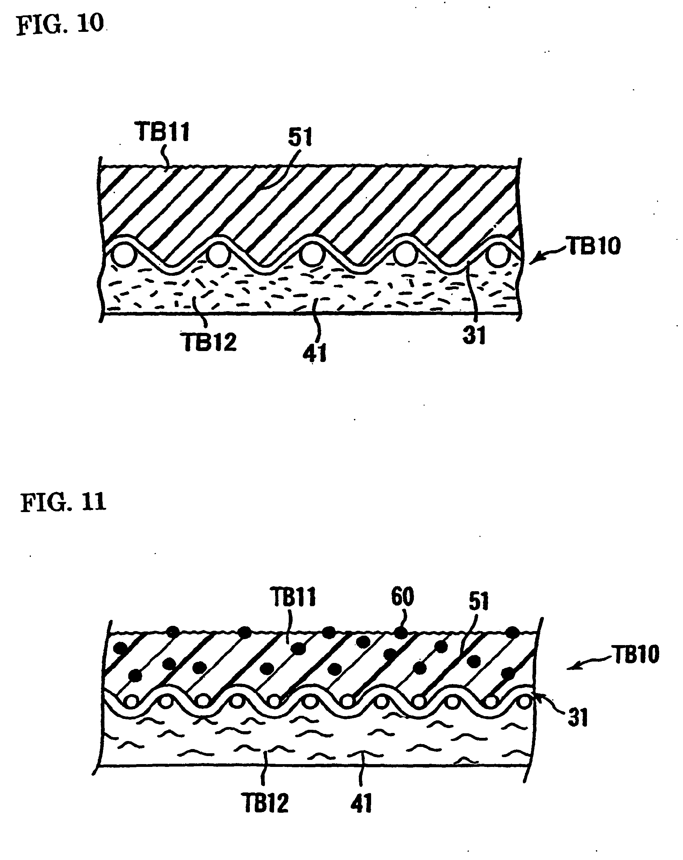

The transfer belt shown in Figure 10 meets the requirements described above for the proper operation of a wet paper web transfer belt by continually changing its surface roughness as it passes through the press part of the papermaking machine. However, in use the wet paper web side layer TB11 becomes worn, and the desirable effects resulting from the changing surface roughness of the belt diminish. Consequently, the belt becomes increasingly difficult to use over time.

To address this deficiency in the belt of FIG. 10, Japanese Patent No. 3264461 discloses an alternative transfer belt structure, as shown in Figure 11, in which particles 60 of a filler protrude from the surface on the wet paper web side layer TB11. For the purpose of illustration, the size of the filler particles is exaggerated in FIG. 11, since the actual particle size is in the order of a micron. The protruding filler particles 60 contribute to breaking of the thin water film. Moreover, the use of a hydrophilic filler makes it possible for the thin water film which is formed after the belt moves out of the nip of the press part to concentrate at the locations of the protruding filler bodies 60 and thus be destroyed.

Kaolin clay (hydrous silicic acid aluminum, having the general chemical formula $Al_2O_3 \cdot 2SiO_2 \cdot 2H_2O$) is used for the filler.

Because the surface of the wet paper web side layer TB11 of the transfer belt is relatively smooth, there is a high likelihood that some filler bodies will separate from the surface of the belt, either during manufacture of the belt or during its use in the papermaking process. In the manufacturing process, the filler which is mixed with liquefied high molecular weight elastic material, and the mixture is applied to a woven cloth 31 and then cured. After curing, the surface of the wet paper web side layer TB11 is ground, and in the grinding process some of the filler is scooped out. Filler can also separate from the belt in the paper-making process due to the high operating speeds and the strain in the belt resulting from the application of pressure in the press part of the machine. Because of the loss of filler, it has been difficult to obtain uniform physical properties in a transfer belt, and adequate durability. Thus it was difficult to produce a wet paper web transfer belt suitable for use over a long time.

WO0127387 discloses a transfer belt for a paper machine, the transfer belt comprises a base structure and a fibre batt layer attached to the base structure and facing the fibre web. At least the fibre batt layer side of the belt is provided with a polymer matrix impregnating the fibre batt layer. The transfer belt fibre batt layer comprises at least two fibres with different surface properties.

EP1096066 discloses a wet web transfer belt for a closed draw paper making machine which is provided with a rough surface to allow easy release of the wet web. The rough surface is formed from a welded layer of multiple fibre in which a filler material is incorporated.

EP0576115 discloses a transfer belt for carrying a paper sheet in a paper machine from a press nip in a closed draw to a transfer point, where it is readily released. The belt comprises a supporting base with a particle filled polymer coating on its paper-facing surface, which surface has a pressure responsive recoverable degree of roughness.

An object of this invention, therefore, is to provide a wet paper web transfer belt which can be used for a long time, while fully meeting the requirements for attachment of the wet paper web to the belt during transport, and smooth removal of the wet paper web from the belt when the web is transferred to a next stage in the papermaking process.

SUMMARY OF THE INVENTION

In accordance with the invention, a wet paper web transfer belt, for use in the press part of a closed draw papermaking machine, comprises comprising a base body, a machine side layer, and a wet paper web side layer, the wet paper web side layer having a wet paper web contacting surface and having porous bodies embedded therein. A plurality of the porous bodies, which comprise porous fibers, are exposed at the wet paper web contacting surface. The porous bodies protrude from the wet paper web side layer of the belt.

The porous bodies resist falling off the belt because they are well-anchored in the wet web side layer, which is composed of a mixture of the porous bodies in a high molecular weight elastic material, preferably such as urethane resin, which enters the pores of the bodies. The transfer belt can transport an attached wet paper web, and release the web smoothly to a next stage in the papermaking process, over a long period of use.

BRIEF DESCRIPTION OF THE DRAWINGS

FIG. 1 (a) is a cross-sectional schematic view, taken in the cross machine direction, of first embodiment of a wet paper web transfer belt according to the invention;

FIG. 1 (b) is a cross-sectional schematic view, taken in the cross machine direction, of a second embodiment of wet paper web transfer belt according to the invention:

FIG. 2 (a) is an enlarged view of a porous particle for use in the belt of FIG. 1(a);

FIG. 2(b) is an enlarged oblique view of a porous fiber for use in the belt of FIG. 1(b);

FIG. 3 is a first cross-sectional view illustrating the operation of a wet paper web transfer belt according to the invention;

FIG. 4 is a second cross-sectional view illustrating the operation of a wet paper web transfer belt according to the invention;

FIG. 5 is a cross-sectional view of a wet paper web transfer belt in accordance with as embodiment of the invention;

FIG.6 is a cross-sectional view of a wet paper web transfer belt of another embodiment according to the invention;

FIG. 7 is a cross-sectional view of a wet paper web transfer belt of still another- embodiment: according to the invention;

FIG. 8 is a schematic view of an apparatus for evaluating the functional durability of wet paper web transfer belts;

FIG. 9 is a schematic view of a typical closed draw papermaking machine;

FIG. 10 is a cross-sectional view of a conventional wet paper web transfer belt; and

FIG. 11 is a cross-sectional view of another conventional wet paper web transfer belt.

DETAILED DESCRIPTION OF THE PREFERRED EMBODIMENTS

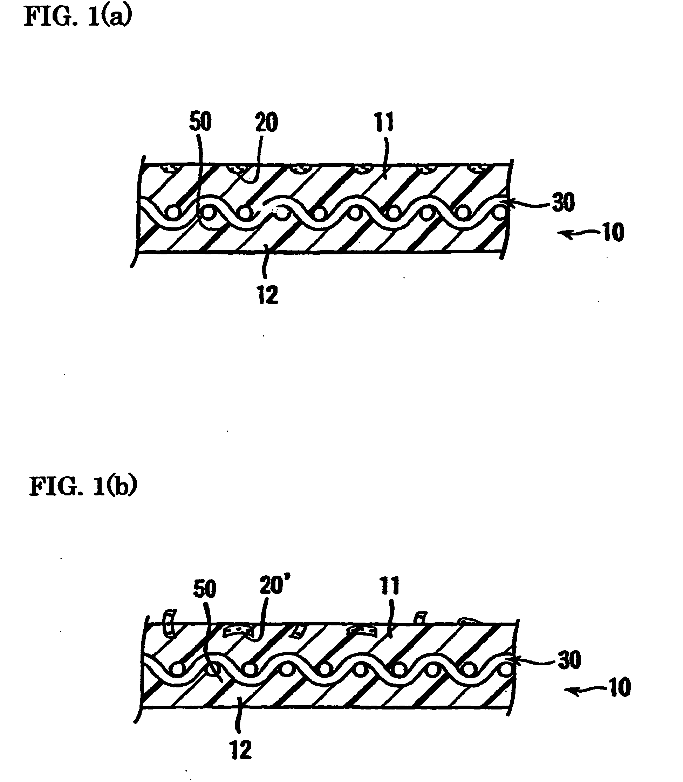

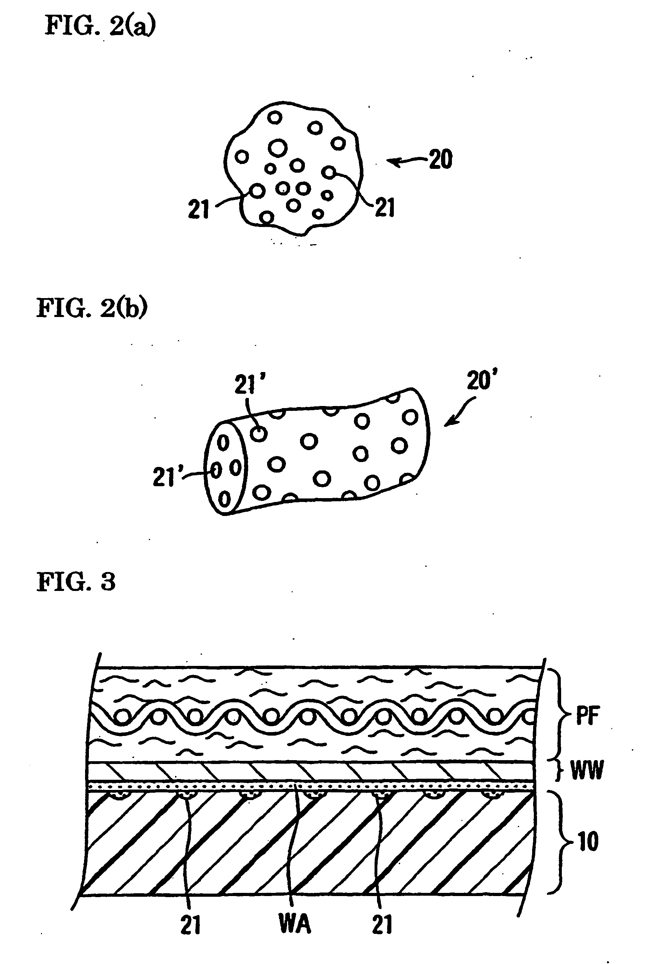

Each of the wet paper web transfer belts 10 of FIGS. 1(a) and 1(b) comprises a base body 30, a wet paper web side layer 11 and a machine side layer 12. The wet paper web side layer 11 is formed by a high molecular weight elastic material 50. In FIG. 1 (a) , porous bodies 20, are in the form of particles, as shown in detail in FIG. 2 (a). These porous bodies are exposed at the surface of the wet paper web side layer 11. In FIG. 1 (b) the porous bodies are in the form of porous fibers 20', as shown in detail in FIG. 2 (b). Some of these porous fibers 2.0' are exposed at the surface of the wet paper web side layer 11 and some of the porous fibers 20' protrude from the surface of the layer 11.

The high molecular weight, elastic material enters the pores of the porous bodies 20 and 20', thereby achieving a greater contact area between the elastic material and the bodies than in the case or non-porous bodies. Because the high molecular weight elastic material enters the pores of the bodies, and because of the greater contact area, the exposed and protruding bodies are firmly anchored in the wet paper web side layer 11. Thus, unlike an ordinary filler such as kaolin, etc. , which tends to fall off by itself during use even without being worn away, the porous bodies 20 and 20' tend to wear during use in the same way as the surrounding resin as a result of friction and abrasion. The distribution of the exposed porous bodies does not chance as a result of abrasion during use.

A wet paper web transfer belt of the invention may be produced by mixing the porous bodies into a high molecular weight elastic material, forming the wet web side layer of a belt from the mixture, and then grinding the surface of the wet web side layer, and thereby either exposing porous bodies or causing them to protrude from the surface of the belt.

In an alternative manufacturing method, porous fibers are intertwined with the outer surface of a base body by a process such as needle punching. A high molecular weight elastic material is then laid onto the porous fiber layer, forming a wet web side layer composed of porous fibers impregnated with the elastic material. Thereafter, the outer surface of the wet web side layer is ground to expose some of the porous fibers or to cause some of the fibers to protrude.

In FIG. 3, which is a cross-sectional view taken at the press part of a papermaking machine, a press felt PF, a wet paper web WW and a wet paper web transfer belt 10 are shown.
The wet paper web WW is pinched between the press felt PF and the belt 10. At the press part, most of the water from the wet paper web moves to the press felt PF, since the permeability of the wet paper web transfer belt 10 is either zero or very low. Water WA from the wet paper web WW forms a film between the wet paper web WW and the belt 10.

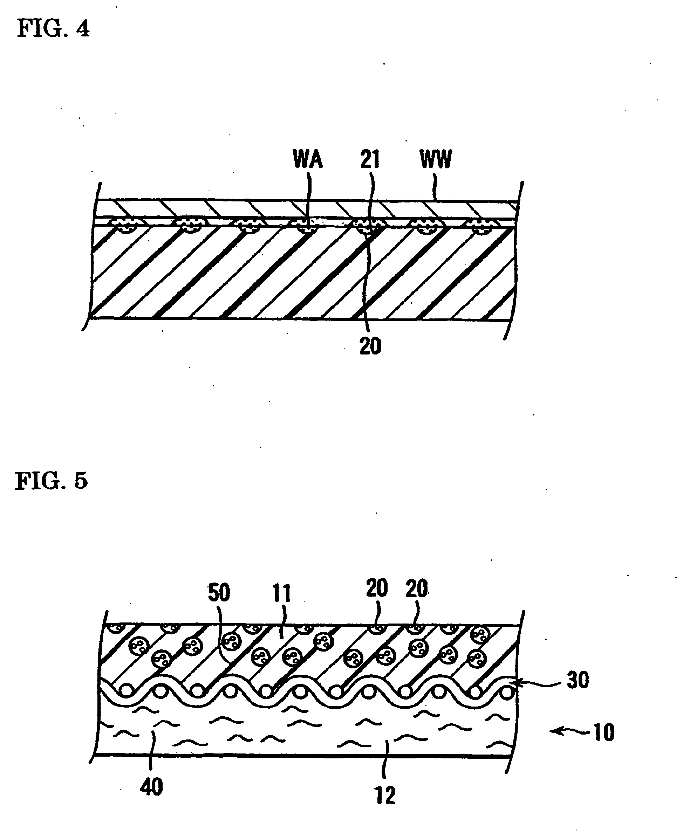

In FIG. 4, which shows press felt PF, the wet paper web WW, and the wet paper web transfer belt 10 after they have traveled beyond the press part. The porosity of the porous bodies improves their affinity for water, and causes water to concentrate at the locations of the exposed porous bodies. The water between the wet paper web WW and the belt 10 is drawn to the pores 21 of the porous bodies 20 by capillary action, and the water becomes concentrated at the locations of the exposed porous bodies, as shown in FIG. 4.

Porous fibers exhibit the same effect as non-fibrous porous filler bodies. Protruding porous fibers also draw water due to the effect of surface tension.

The water held in the porous bodies 20 enables the wet paper web WW to remain attached to the wet paper web transfer belt 10. However, when the belt 10, carrying the wet paper web WW travels to a next stage in the papermaking process, the web may be transferred smoothly from the belt 10 because the water is concentrated at the locations of the porous bodies and is not in the form of a continuous film, which would cause strong adhesion of the web to the belt.
The use of porous bodies in the wet web side layer of the transfer belt enables the transfer belt to satisfy the requirements of adhesion of the wet web to the belt, and smooth release of the wet web from the belt, without depending on surface roughness of the high molecular weight elastic material which forms the wet paper web side layer.

The size of the porous bodies 20 is preferably such that a rectangle, having the minimum area required to surround the pores of a porous body, has a larger side less than 10 $\mu$m in length. This length is shorter than an average pulp fiber in a wet paper web. By maintaining the sizes of the porous bodies within this dimensional limit, the possibility of clogging is reduced, and the beneficial effects of the porous bodies 20 can be realized over a long therm of operation.

Because the pores 21 are smaller than the average interval between pulp fibers in a wet paper web, water held in the pores 21 does not move back into to the wet paper web WW by capillary action immediately after the wet paper web moves out of the press part. Therefore, the porous bodies do not cause re-wetting.

The area ratio of the exposed parts of the porous bodies 20 to the surface of the belt is preferably in the range from 5% to 50%. A ratio below 5% makes it difficult to remove the wet paper web from the wet paper web transfer belt, and a ratio above 50% causes the belt to lose its flexibility so that it no longer functions properly as a belt. The area ratio may be easily measured by photographing the surface of the belt with an electron microscope, scanning the picture into a computer, clarifying the picture using picture reading software such as "Photoshop5" from Adobe System Incorporated, and then calculating the areas of the porous bodies by the use of image processing software such as "NIH image" from the National Institutes of Health.

In the case of a porous filler, a porous body 20 having an average body diameter from 5$\mu$m to 500$\mu$m may be used. The porous filler may be inorganic or organic, and may be hydrophilic or hydrophobic.

Diatomaceous earth (silicic acid: biolite, which contains more than 80% $SiO_2$) may be used as an inorganic porous filler. This product is available on the market as "RADIOLITE FINE FLOW B", a trademark of Showa Chemical Industry Co., Ltd. A high functional acrylic fiber may be used as an organic porous fiber. This product is available on the market as "BIOSAFE", a trademark of Kanebo Synthetic Fiber Co., Ltd.

The porosity of the porous body is preferably around 90% for a porous filler and 60% for a porous fiber. Porosity is calculated using the formula:

$$\text{Porosity} = [1-W_1/P\ (W_3-W_2)]\times100\%$$

where:

W$_1$ is the weight of a dried sample;
W$_2$ is the weight of a sample which absorbs water and is suspended underwater;
W$_3$ is the weight of a sample which absorbs water; and
P is the true density.

Specific examples of wet paper web transfer belts according to the invention will be explained, with reference to FIGs. 5-7.

The wet paper web transfer belt 10 in FIG. 5 comprises a base body 30, a batt layer 40 comprising a batt fiber intertwiningly integrated with one side of the base body 30, and a high molecular weight elastic section 50 formed on the other side of the base body 30. The high molecular weight elastic section 50 constitutes the wet paper web side layer 11, and the batt layer 40 constitutes the machine side layer 12.

Numerous porous bodies 20 are exposed on the surface of the wet paper web side layer 11. The wet paper web side layer 11 may be obtained by mixing porous bodies 20 with liquid, high molecular weight, elastic material used to form the high molecular weight elastic section 50. After curing the high molecular weight elastic material containing the porous bodies 20, porous bodies are exposed by grinding the surface of the wet paper web side layer 11 with sandpaper, a whetstone, or the like.

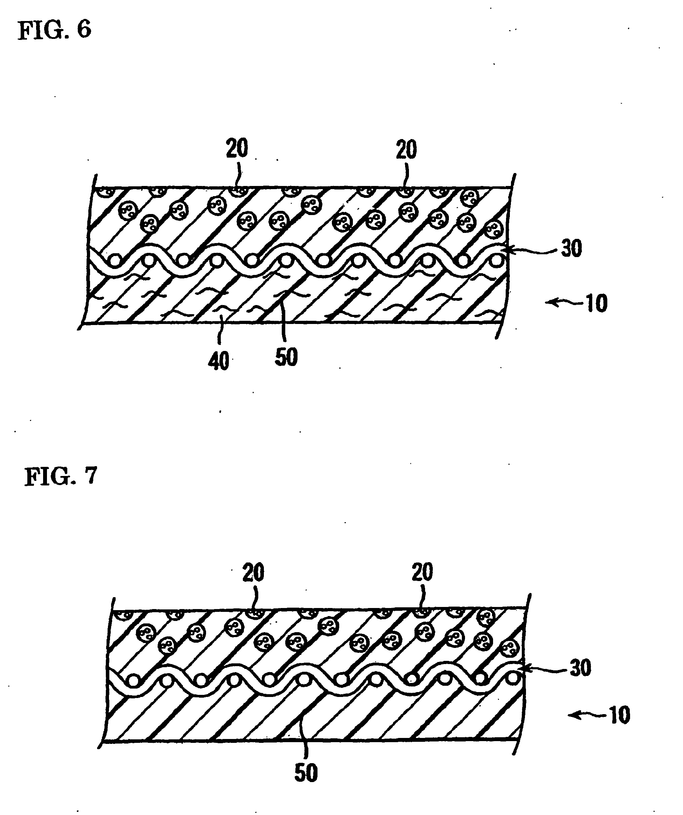

In FIG. 5, the machine side layer of the wet paper web transfer belt 10 comprises only batt fiber 40. However, a high molecular weight elastic material may be impregnated into this batt fiber 40 as shown in FIG. 6.

Moreover, the machine side layer may be composed entirely of a high molecular weight elastic material 50 as shown in FIG. 7, so that the transfer belt is formed without a batt fiber layer. In other words, it is sufficient for a wet paper web transfer belt 10 according to the invention that it include a wet paper web side layer 11 comprising a high molecular weight elastic section and porous bodies exposed on the surface of the wet paper web side layer 11.

In each of the cases illustrated in FIGs. 5-7, the porous bodies 20 are exposed by grinding the surface of the wet paper web side layer 11.

The wet paper web side layer 11 of a wet paper web transfer belt 10 according to the invention contributes to the formation of an excellent paper surface since its web-contacting surface is smoother than the web-contacting surface of a press felt.

A thermosetting urethane resin or the like may be used as the material of the high molecular weight elastic section 50, and its Shore A hardness is desirably between 50 and 95.

In general, it is satisfactory if the wet paper web transfer belt according to the invention has no permeability. On the other hand, some papermaking machines requires a transfer belt having permeability. In such a case, the desired belt structure may be obtained by reducing the amount of the impregnated high molecular weight elastic material, increasing the amount of grinding, or using a high molecular weight elastic material having open cells. However, even in the case of a belt having some permeability case, the permeability of the belt is preferably 2cc/cm$^2$/sec or less, measured by the test method for general woven fabric specified in JIS L 1096, using a fragile type testing machine.

The base body 30 imparts strength to the wet paper web transfer belt. While a fabric woven with machine direction yarns and cross machine direction yarns is shown in FIGs. 5-7, the base body is not limited to this structure, and may have various alternative structures as appropriate, such as, yarns in the machine direction and the cross machine direction which are overlapping rather than woven, or may be in the form of a film a knitted structure, or a wide belt-shaped body made by winding a narrow belt-shaped body in a helix.

EXAMPLE 1

A wet paper web transfer belt having the structure shown in FIG. 5 was produced in the following process.

An endless double woven fabric was obtained by weaving machine direction yarns and cross machine direction yarns of nylon-6 so that the basis weight of the double woven fabric was 600 g/m$^2$. Staple fiber comprising nylon-6 and having an average fineness of 20 dtex was intertwiningly integrated with the outer surface of an endless woven fabric by needle punching. The basis weight of the staple fiber layer was 200g/m$^2$.

The fabric was then turned over, and the side which was not previously intertwiningly integrated with staple fiber became a new outer surface. To form the batt layer, staple fiber having an average fineness of 20 dtex was then intertwiningly integrated with the new outer surface by needle punching so that the basis weight of the staple fiber lawyer 200g/m$^2$ Thus, a belt having a batt with a basis weight of 200g/m$^2$ on both sides was formed.

One side of the structure was then coated with urethane resin containing a RADIOLITE FINE FLOW B as a porous filler. The porous filler was present in the mixture in an amount equal to 30% by weight relative to 100% by weight of the urethane resin was mixed. Moreover, the average diameter of the porous bodies was 13.7μm. The porosity of the porous bodies was 90%, and the main component of the porous material was SiO$_2$.

After curing the urethane resin, the outer surface was ground to a ten-point average surface roughness Rz of 15 μm. The grinding process exposed porous bodies on the surface of the resin layer, and completed the wet paper web transfer belt.

EXAMPLE 2

A wet paper web transfer belt according to the invention was produced by the following process.

An endless double woven fabric was obtained by weaving machine direction yarns and cross machine direction yarns of nylon-6 so that the basis weight of the double woven fabric was 600 g/m$^2$. Staple fiber comprising nylon-6 and having an average fineness of 20 dtex was intertwiningly integrated with the outer surface of an endless woven fabric by needle punching. The basis weight of the staple fiber layer was 200g/m$^2$.

The fabric was then turned over, and the side which was not previously intertwiningly integrated with staple fiber became a new outer surface. A multilayer BIOSAFE staple fiber having an average fineness of 3.3 dtex an average length of 76 mm, and a porosity of 60%, was intertwiningly integrated with the new outer surface of the woven fabric by needle punching so that the basis weight of the latter staple fiber layer 300g/m$^2$. Thus, a belt in which basis weight of an inside batt was 200g/m$^2$, and the basis weight of an outer side batt was 300g/m$^2$, was obtained. The BIOSAFE staple fiber layer was pressed to make its density 0.4 g/cm$^3$.

The outer surface of the woven fabric was then impregnated with urethane resin and cured.

After curing the urethane resin, the outer surface was ground to a ten-point average roughness Rz of 35 μm. The grinding process exposes porous bodies on the surface of the resin layer, and completed the wet paper web transfer belt.

COMPARATIVE EXAMPLE

As a comparative example, the structure shown in FIG. 11 was produced in the following process.

An endless double woven fabric was obtained by weaving machine direction yarns and cross machine direction yarns of nylon-6 so that the basis weight of the double woven fabric was 600 g/m$^2$. Staple fiber comprising nylon-6 and having an average fineness of 20 dtex was intertwiningly integrated with the outer surface of an endless woven fabric by needle punching. The basis weight of the staple fiber layer was 200g/m$^2$.

The fabric was then turned over, and the side which was not previously intertwiningly integrated with staple fiber became a new outer surface. To form the batt layer, staple fiber having an average fineness of 20 dtex was then intertwiningly integrated with the new outer surface by needle punching so that the basis weight of the staple fiber layer 200g/m$^2$. Thus, a belt having a batt with a basis weight of 200g/m$^2$ on both sides was formed.

A mixture of kaolin clay and urethane resin, containing 40% by weight of kaolin clay relative to 100% by weight of urethane resin, was coated over the outer surface of the woven fabric. The average diameter of the kaolin clay particles was 9.5 μm, and their porosity was 20%.

After curing the urethane resin, the outer surface was ground to a ten-point average roughness Rz of 15μm. This process caused kaolin clay to protrude from the surface of resin and completed the wet paper web transfer belt.

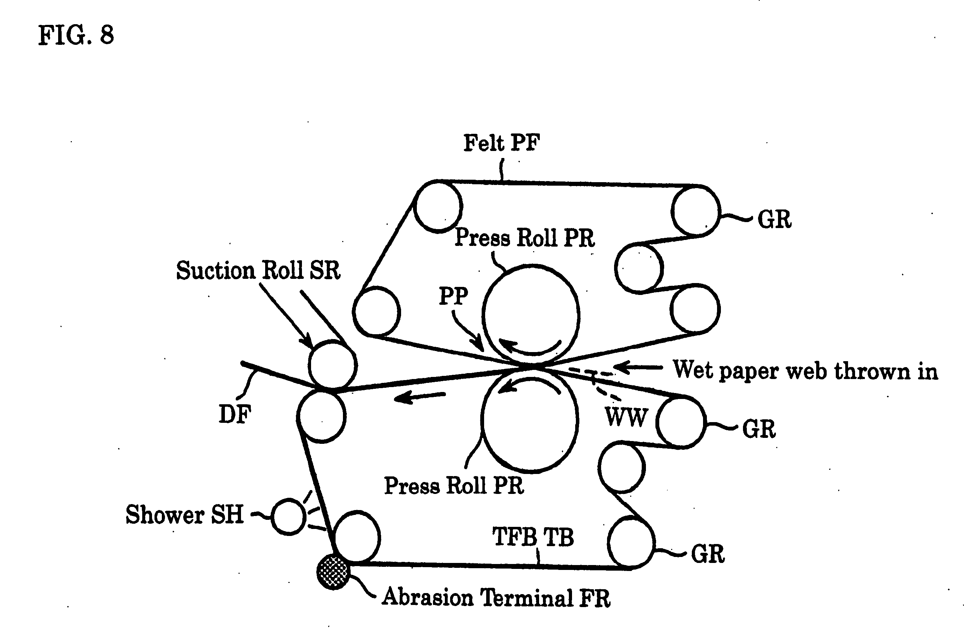

Tests of the three wet paper web transfer belts were conducted by using an apparatus as shown in FIG. 8.

This experimental apparatus comprises a pair of press rolls PR forming a press part PP, a press felt PF pinched by the press rolls, and a wet paper web transfer belt TB. The press felt PF and the wet paper web transfer belt TB were supported under a predetermined tension by a plurality of guide rolls GR, and moved along with the rotation of the press rolls PR.

SR is a suction roll and DF is a dryer fabric in FIG. 8. While only a part of a dryer fabric DF is shown, the dryer fabric is endless, and is supported by guide rolls GR and driven by the wet paper web transfer belt TB.

An abrasion terminal FR, which comprises ultra high molecular weight polyethylene, is pushed against the wet paper web transfer belt TB to accelerate abrasion of the belt TB.

In the operation of the test apparatus, a wet paper web WW was thrown on the wet paper web transfer belt TB on the upstream side relative to the press part PP. The wet paper web WW passed through the press part PP, and was transferred from the transfer belt TB to the dryer fabric DR by the suction roll SR.

The tests were carried out on the wet paper web transfer belts immediately following the production of the belts..

The wet paper transfer belts were run for 30 hours in these tests, and during the tests, the abrasion terminal FR continuously wore the wet paper web transfer belt TB. After the elapse of 30 hours, a wet paper web WW was thrown on the transfer belt TB once again. The test, therefore, compares a new wet paper web transfer belt TB with a worn belt.

The driving speed of the apparatus was 150 m/min, the pressure at the press part was 40kg/cm, and the vacuum at the suction roll SR was 150 mm Hg. The wet paper web WW was composed of craft pulp, having an average basis weight of 80g/m$^2$ and a dryness of 38%.

The press felt PF had a conventional structure, comprising a woven fabric and a batt layer which was intertwiningly integrated with the woven fabric by needle punching. The press felt had a basis weight of 1200g/m$^2$, a batt fiber fineness of 10 dtex, and a felt density 0.45/cm$^3$

The results of the tests are shown in the following table.

|  | New | | After being run for 30 hours | |
| --- | --- | --- | --- | --- |
|  | Adhesion after being pressed | Transfer to next process | Adhesion after being pressed | Transfer to next process |
| EXAMPLE 1 | good | good | good | good |
| EXAMPLE 2 | good | good | good | good |
| COMPARATIVE EXAMPLE | good | good | good | fail |

As shown in the table, excellent results were obtained from Examples 1-2 in all the tests.

On the other hand, in the case of the comparative example, difficulty was encountered in the transfer of the wet paper web to the dryer fabric DF after the transfer belt was run for 30 hours.

The conditions of the surface of the wet paper web transfer belt when new, and after having been run for 30 hours, were photographed by an electron microscope for each of Examples 1 and 2, and the comparative example. After the belts were run for 30 hours, porous bodies were found in the belts of Examples 1 and 2, but no kaolin clay was found in the belt of the comparative example.

The belt of the comparative example functioned efficiently when new because of the surface roughness resulting from grinding of the surface of the resin and the exposure of the kaolin clay in the manufacturing process. However, after the belt of the comparative example was run for 30 hours, the surface of resin was worn smooth by the abrasion terminal FR, and the kaolin clay fell away. The water film between the belt and the wet paper web WW did not break, and therefore failure occurred in the transfer of the wet paper web WW to the drying stage.

On the other hand, in the case of Examples 1 and 2, because the porous bodies were anchored in the resin the porous bodies did not fall off even after resin was worn. As a result, the belt continued to function efficiently regardless of the condition of the surface roughness of resin. In addition, it was determined from electron microscope photographs that the porous bodies and resin were worn almost at the same rate. Therefore, even after abrasion, excellent results were obtained with the belts of Examples 1 and 2.

In summary, the transfer belt in accordance with the invention is advantageous because the porous bodies are anchored in the resin on the wet paper web side of the belt. The porous bodies resist falling off from the wet paper web side layer. The proper function of the belt, in which the wet paper web remains attached to the belt during transport but can be transferred smoothly to a next stage in the papermaking process, can be maintained over a very long period of time.

**Claims**

1. A wet paper web transfer belt (10) for use in the press part (PP) of a closed draw papermaking machine, said belt (10) comprising a base body (30), a machine side layer (12), and a wet paper web side layer (11) comprising a high molecular weight elastic material, the wet paper web side layer (11) having a wet paper web contacting surface and having porous fibers (20') embedded therein and anchored by high molecular weight elastic' material of the wet paper web side layer (11) in pores of embedded parts of the porous fibers (20'), wherein a plurality of said porous fibers (20') have exposed parts at said wet paper web contacting surface, and a plurality of said exposed parts of the porous fibers (20') protrude from the wet paper web side layer (11) such that water on the wet paper web contacting surface can be drawn into pores of the exposed parts of the porous fibers (20') by capillary action.

2. A wet paper web transfer belt according to claim 1, wherein the area ratio of the exposed parts of the porous fibers (20') to the wet paper web contacting surface is in the range from 5% to 50%.

3. A wet paper web transfer belt according to any preceding claim, wherein the porosity of the porous fibers (20') is around 60%.

4. A closed draw papermaking machine comprising a press part (PP) and a wet paper web transfer belt (10) arranged to carry a wet paper web through said press part (PP), said transfer belt (10) comprising a base body (30), a machine side layer (12), and a wet paper web side layer (11) comprising a high molecular weight elastic material, the wet paper web side layer (11) having a wet paper web contacting surface and having porous fibers (20') embedded therein and anchored by high molecular weight elastic material of the wet paper web side layer (11) In pores of embedded parts of the porous fibers (20'), wherein a plurality of said porous fibers (20') have exposed parts at said wet paper web contacting surface, and a plurality of said exposed parts of the porous fibers (20') protrude from the wet paper web side layer (11) such that water on the wet paper web contacting surface can be drawn into pores of the exposed parts of the porous fibers (20') by capillary action

5. A closed draw papermaking machine according to claim 4, wherein the area ratio of the exposed parts of the porous fibers (20') to the wet paper web contacting surface of the transfer belt (10) is in the range from 5% to 60%.

6. A closed draw papermaking machine according to claim 4 on 5, wherein the porosity of the porous fibers (20') of the transfer belt (10) is around 60%.

**Patentansprüche**

1. Transferband (10) für eine feuchte Papierbahn zur Verwendung in der Pressenpartie (PP) einer Papierherstellungsmaschine mit geschlossenem Zug, wobei das Band (10) einen Basiskörper (30), eine Maschinenseitenschicht (12) und eine Feuchtpapierbahnseitenschicht (11) umfasst, die ein elastisches Material mit hohem Molekulargewicht umfasst, wobei die Feuchtpapierbahnseitenschicht (11) eine die feuchte Papierbahn berührende Oberfläche hat und poröse Fasern (20') hat, die darin eingebettet und durch das elastische Material mit hohem Molekulargewicht der Feuchtpapierbahnseitenschicht (11) in Poren von eingebetteten Teilen der porösen Fasern (20') verankert sind, wobei eine Vielzahl der porösen Fasern (20') offen liegende Teile an der die feuchte Papierbahn berührenden Oberfläche hat, und wobei eine Vielzahl der offen liegenden Teile der porösen Fasern (20') aus der Feuchtpapierbahnseitenschicht (11) vorstehen, so dass Wasser auf der die feuchte Papierbahn berührenden Oberfläche durch Kapillarwirkung in Poren der offen liegenden Teile der porösen Fasern (20') gesaugt werden kann.

2. Transferband für eine feuchte Papierbahn gemäß Anspruch 1, wobei das Flächenverhältnis der offen liegenden Teile der porösen Fasern (20') zu der die feuchte Papierbahn berührenden Oberfläche im Bereich von 5 % bis 50 % liegt.

3. Transferband für eine feuchte Papierbahn gemäß Anspruch 1, wobei die Porosität der porösen Fasern (20') etwa 60 % beträgt.

4. Papierherstellungsmaschine mit geschlossenem Zug, umfassend eine Pressenpartie (PP) und ein Transferband (10) für eine feuchte Papierbahn, das zum Transportieren einer feuchten Papierbahn durch die Pressenpartie (PP) angeordnet ist, wobei das Transferband (10) einen Basiskörper (30), eine Maschinenseitenschicht (12) und eine Feuchtpapierbahnseitenschicht (11) umfasst, die ein elastisches Material mit hohem Molekulargewicht umfasst, wobei die Feuchtpapierbahnseitenschicht (11) eine die feuchte Papierbahn berührende Oberfläche hat und poröse Fasern (20') hat, die darin eingebettet und durch das elastische Material mit hohem Molekulargewicht der Feuchtpapierbahnseitenschicht (11) in Poren von eingebetteten Teilen der porösen Fasern (20') verankert sind, wobei eine Vielzahl der porösen Fasern (20') offen liegende Teile an der die feuchte Papierbahn berührenden Oberfläche hat, und wobei eine Vielzahl der offen liegenden Teile der porösen Fasern (20') aus der Feuchtpapierbahnseitenschicht (11) vorstehen, so dass Wasser auf der die feuchte Papierbahn berührenden Oberfläche durch Kapillarwirkung in Poren der offen liegenden Teile der porösen Fasern (20') gesaugt werden kann.

5. Papierherstellungsmaschine mit geschlossenem Zug gemäß Anspruch 4, wobei das Flächenverhältnis der offen liegenden Teile der porösen Fasern (20') zu der die feuchte Papierbahn berührenden Oberfläche des Transferbands (10) im Bereich von 5 % bis 50 % liegt.

6. Papierherstellungsmaschine mit geschlossenem Zug gemäß Anspruch 4 oder 5, wobei die Porosität der porösen Fasern (20') des Transferbands (10) etwa 60 % beträgt.


**Revendications**

1. Une bande de transfert de feuille de papier continue humide (10) pour une utilisation dans la section des presses (PP) d'une machine à papier à tirage fermé, ladite bande (10) comportant un corps de base (30), une couche côté machine (12), et une couche côté feuille de papier continue humide (11) comportant un matériau élastique de poids moléculaire élevé, la couche côté feuille de papier continue humide (11) ayant une surface en contact avec la feuille de papier continue humide et ayant des fibres poreuses (20') intégrées en elle et ancrées par le matériau élastique de poids moléculaire élevé de la couche côté feuille de papier continue humide (11) dans des pores des parties intégrées des fibres poreuses (20'), où une pluralité desdites fibres poreuses (20') ont des parties exposées à ladite surface en contact avec la feuille de papier continue humide, et une pluralité desdites parties exposées des fibres poreuses (20') font saillie à partir de la couche côté feuille de papier continue humide (11) de telle sorte que de l'eau sur la surface en contact avec la feuille de papier continue humide peut être tirée jusque dans des pores des parties exposées des fibres poreuses (20') par action capillaire.

2. Une bande de transfert de feuille de papier continue humide selon la revendication 1, où le rapport de surface des parties exposées des fibres poreuses (20') à la surface en contact avec la feuille de papier continue humide va de 5 % à 50 %.

3. Une bande de transfert de feuille de papier continue humide selon n'importe quelle revendication précédente, où la porosité des fibres poreuses (20') est d'environ 60 %.

4. Une machine à papier à tirage fermé comportant une section des presses (PP) et une bande de transfert de feuille de papier continue humide (10) agencée pour porter une feuille de papier continue humide à travers ladite section des presses (PP), ladite bande de transfert (10) comportant un corps de base (30), une couche côté machine (12), et une couche côté feuille de papier continue humide (11) comportant un matériau élastique de poids moléculaire élevé, la couche côté feuille de papier continue humide (11) ayant une surface en contact avec la feuille de papier continue humide et ayant des fibres poreuses (20') intégrées en elle et ancrées par le matériau élastique de poids moléculaire élevé de la couche côté feuille de papier continue humide (11) dans des pores des parties intégrées des fibres poreuses (20'), où une pluralité desdites fibres poreuses (20') ont des parties exposées à ladite surface en contact avec la feuille de papier continue humide, et une pluralité desdites parties exposées des fibres poreuses (20') font saillie à partir de la couche côté feuille de papier continue humide (11) de telle sorte que de l'eau sur la surface en contact avec la feuille de papier continue humide peut être tirée jusque dans des pores des parties exposées des fibres poreuses (20') par action capillaire.

5. Une machine à papier à tirage fermé selon la revendication 4, où le rapport de surface des parties exposées des fibres poreuses (20') à la surface en contact avec la feuille de papier continue humide de la bande de transfert (10) va de 5 % à 50 %.

6. Une machine à papier à tirage fermé selon la revendication 4 ou 5, où la porosité des fibres poreuses (20') de la bande de transfert (10) est d'environ 60 %.

FIG. 1(a)

FIG. 1(b)

FIG. 2(a)

FIG. 2(b)

FIG. 3

FIG. 4

WA    21    WW

20

FIG. 5

50    11    20  20

30

10

40    12

FIG. 6

FIG. 7

FIG. 8

GR

Wet paper web thrown in

GR

WW

GR

Felt PF

Press Roll PR

PP

Press Roll PR

TFB TB

Abrasion Terminal FR

Suction Roll SR

DF

Shower SH

FIG. 9

FIG. 10

TB11    51

TB10

TB12    41    31

FIG. 11

TB11    60    51

TB10

31

TB12    41

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3264461 B
- WO 0127387 A
- EP 1096066 A
- EP 0576115 A